# EUROPEAN PATENT APPLICATION

(11) **EP 4 821 634 A1**
(43) Date of publication of application: **14.10.2026**
(21) Application number: 23960856.5
(22) Date of filing: 08.12.2023
(51) Int. Cl.: B23Q 17/09, B23Q 17/24

(54) **TOOL IMAGING DEVICE**

(71) Applicant: Saias Inc., Tokyo 108-0075 (JP)
(72) Inventor: MURAKAMI, Tomohiro, Misato-shi, Saitama 341-0044 (JP)
(74) Representative: Zacco Norway AS
(86) International application number: PCT/JP2023/044027
(87) International publication number: WO 2025/120846

(57) **Abstract**

Provided is a tool imaging device (1) enabling stable and accurate imaging of the state of a cutting part of a cutting tool. The invention is provided with: a workpiece rotation unit (2) for causing a workpiece (W) to rotate sequentially at a predetermined rotation angle; a rotation angle management unit for detecting the rotation angle of the workpiece (W); a rotation angle control unit (5) for controlling the rotation angle of the workpiece (W); a workpiece sliding unit (4) for causing the workpiece (W) to slide; a site-of-interest detection unit (6) for detecting a portion of a cutting part of the workpiece (W) as being a site of interest (Wt); a site-of-interest imaging unit (7) for imaging the site of interest (Wt) of the workpiece (W); and an image processing unit (8) for performing image processing of imaging data (1m). With respect to each of a plurality of cutting parts in the workpiece (W), the site-of-interest detection unit (6) pre-specifies, as the site of interest (Wt), at least one site along a direction of extension of the cutting part. The site-of-interest imaging unit (7) sequentially and continuously images the sites of interest (Wt) of the sequentially rotating workpiece (W), each site of interest being imaged at the same imaging angle.

## Description

### TECHNICAL FIELD

The present invention relates to a tool imaging device, and particularly to a tool imaging device for imaging a cutting part of a round rod-shaped cutting tool with the cutting part, as a workpiece, such as a drill bit or an end mill.

### BACKGROUND ART

For example, for round rod-shaped cutting tools, such as drill bits used for drilling machines, lathes, hand drills, and the like, and end mills used for milling machines, those having a plurality of flutes excellent in cutting efficiency, such as a two-flute cutting edge (two edges) and a four-flute cutting edge (four edges), are actively used. For such cutting tools, quality management of the cutting part is particularly important from the perspective of improving the accuracy of machining an object to be machined.

As a device for managing a cutting part of a round rod-shaped cutting tool as described above, for example, a device has been proposed that images a cutting part or a cutting edge and checks whether it is good or bad based on the image (see, for example, Patent Literatures 1 and 2).

Further, as a device for managing a cutting part of a cutting tool, for example, a machining device has been proposed that includes on-machine means that images the cutting part from a side of a rotating or a moving cutting tool and that selects an image to be used from a plurality of captured images to be provided for managing the cutting part (see, for example, Patent Literature 3).

Furthermore, as a method for managing a cutting part of a cutting tool, for example, a method has been proposed in which a binary image distinguishing between the cutting part and the other portions is obtained from a captured image and an arrangement angle of the cutting part is obtained based on the image (see, for example, Patent Literature 4).

### CITATION LIST

### PATENT LITERATURE

PATENT LITERATURE 1 JP-A-11-285910
PATENT LITERATURE 2 JP-A-2001-129711
PATENT LITERATURE 3 JP-A-2001-269844
PATENT LITERATURE4 JP-A-09-192986

### SUMMARY OF INVENTION

### TECHNICAL PROBLEM

In the aforementioned round rod-shaped cutting tools such as drill bits, a cutting part is formed on a peripheral surface, while there are locations that are gouged due to the formation of the cutting part in the vicinity. Therefore, in the round rod-shaped cutting tools, it is difficult to accurately focus on the cutting part during imaging, which presents a problem of difficulty in stable imaging.

In addition, since the cutting tools as described above are typically made of steel, the surface gloss inherent to steel causes shine, which makes it difficult to accurately image the state of the cutting part.

Moreover, conventional imaging devices typically perform imaging of a wide area including gouged portions and the like as well as the cutting part of the cutting tool. However, with such an imaging area, there have also been problems in terms of data handling or the like in that the image data size unnecessarily increases and images of portions that are unnecessary for managing the cutting tool are also included.

The present invention has been made in view of the aforementioned problems, and has an object of providing a tool imaging device that can accurately image the state of a cutting part of a cutting tool with stable focus and that is excellent in imaging quality, as well as in data handling and imaging efficiency.

### SOLUTION TO PROBLEM

To solve the aforementioned problems, the present inventors diligently conducted studies. As a result, it has been found that with a site-of-interest detection unit that specifies in advance, as a site-of-interest, a portion of a cutting part extending on a cutting tool and a site-of-interest imaging unit that images the site-of-interest and by imaging the site-of-interest in the cutting part at the same imaging angle, the state of the cutting part can be accurately imaged with stable focus and a small number of images and less data amount without being affected by the shine of a workpiece, or the like. This led to discovery that a device capable of achieving extremely excellent imaging quality, as well as excellent in data handling and imaging efficiency could be realized, and the present invention has been completed.

That is, the present invention is a tool imaging device for imaging a cutting part with a plurality of flutes helically extending on a peripheral surface of a cutting tool, the cutting tool in a round-rod shape being a workpiece to be used for machining of an object to be machined, the tool imaging device including: a workpiece rotation unit that clamps the cutting tool and sequentially rotates the cutting tool at a predetermined rotation angle by having an axis of the cutting tool as a rotation axis; a rotation angle management unit that is connected to the workpiece rotation unit or provided integrally with the workpiece rotation unit, the rotation angle management unit detecting a rotation angle of the cutting tool brought by the workpiece rotation unit; a rotation angle control unit that controls the rotation angle of the cutting tool brought by the workpiece rotation unit; a workpiece sliding unit that slides the cutting tool clamped to the workpiece rotation unit in a direction along the axis of the cutting tool by sliding the workpiece rotation unit in the direction along the axis of the cutting tool; a site-of-interest detection unit that detects in advance at least a portion of the cutting part of the cutting tool, as a site-of-interest for managing the cutting part; a site-of-interest imaging unit that images the site-of-interest in the cutting part from a side of the peripheral surface of the cutting tool; and an image processing unit that performs image processing of image data from the site-of-interest imaging unit, in which the site-of-interest detection unit specifies, as the site-of-interest, at least one site along an extending direction of the cutting part, for each cutting part with the plurality of flutes in the cutting tool, and the site-of-interest imaging unit sequentially and continuously images the site-of-interest in the cutting tool sequentially rotating at the predetermined rotation angle, at the same imaging angle for each site-of-interest.

In the above-described aspect, the tool imaging device of the present invention can adopt the configuration in which the site-of-interest detection unit specifies, as the site-of-interest, one site along the extending direction of the cutting part, for each cutting part with the plurality of flutes in the cutting tool, and the site-of-interest imaging unit sequentially and continuously images the one site-of-interest in each cutting part with the plurality of flutes, in accordance with rotation of the cutting tool at the predetermined rotation angle, at the same imaging angle for each site-of-interest.

In the above-described aspect, the tool imaging device of the present invention can adopt the configuration in which the site-of-interest detection unit further specifies, as the site-of-interest, another site along the extending direction of the cutting part, for each cutting part with the plurality of flutes in the cutting tool, in accordance with sliding of the cutting tool by the workpiece sliding unit, and the site-of-interest imaging unit sequentially and continuously images the other site-of-interest in each cutting part with the plurality of flutes, in accordance with the rotation of the cutting tool at the predetermined rotation angle, at the same imaging angle for each site-of-interest.

In the above-described aspect, the tool imaging device of the present invention can adopt the configuration in which the site-of-interest detection unit repeats operation of specifying, as the site-of-interest, further another site along the extending direction of the cutting part, for each cutting part with the plurality of flutes in the cutting tool, in accordance with further sliding of the cutting tool by the workpiece sliding unit, and the site-of-interest imaging unit repeats operation of sequentially and continuously imaging the further other site-of-interest in each cutting part with the plurality of flutes, in accordance with the rotation of the cutting tool at the predetermined rotation angle, at the same imaging angle for each site-of-interest.

In the above-described aspect, the tool imaging device of the present invention may adopt the configuration in which the site-of-interest detection unit specifies the site-of-interest at a plurality of locations along the extending direction of the cutting part in one same flute of the cutting part with the plurality of flutes in the cutting tool, and the site-of-interest imaging unit sequentially and continuously images the site-of-interest at the plurality of locations specified for the cutting part in the one same flute, in accordance with rotation of the cutting tool at the predetermined rotation angle and sliding of the cutting tool, at the same imaging angle for each site-of-interest.

In the above-described aspect, the tool imaging device of the present invention may adopt the configuration in which the site-of-interest detection unit specifies the site-of-interest at the plurality of locations along the extending direction of the cutting part in another same flute of the cutting part with the plurality of flutes in the cutting tool, and the site-of-interest imaging unit sequentially and continuously images the site-of-interest at the plurality of locations specified for the cutting part in the other same flute, in accordance with the rotation of the cutting tool at the predetermined rotation angle and the sliding of the cutting tool, at the same imaging angle for each site-of-interest.

In the above-described aspect, the tool imaging device of the present invention may adopt the configuration in which the site-of-interest detection unit repeats operation of specifying the site-of-interest at the plurality of locations in the extending direction of the cutting part in further another same flute of the cutting part with the plurality of flutes in the cutting tool, and the site-of-interest imaging unit repeats operation of sequentially and continuously imaging the site-of-interest at the plurality of locations specified for the cutting part in the further other same flute, in accordance with the rotation of the cutting tool at the predetermined rotation angle and the sliding of the cutting tool, at the same imaging angle for each site-of-interest.

In the above-described aspect, the tool imaging device of the present invention can adopt the configuration in which the site-of-interest imaging unit includes a shutter mechanism.

In the above-described aspect, the tool imaging device of the present invention can adopt the configuration in which the site-of-interest imaging unit includes a strobe illuminator that illuminates a position of at least the site-of-interest of the cutting part with the plurality of flutes extending on the cutting tool.

In the above-described aspect, the tool imaging device of the present invention may adopt the configuration in which the site-of-interest imaging unit is provided with an imaging lens in an inclined manner so as to correspond to the site-of-interest in the cutting part helically extending on the cutting tool.

In the present specification, "to sequentially and continuously image ... at the same imaging angle for each site-of-interest" refers to the operation of imaging a site-of-interest as follows.

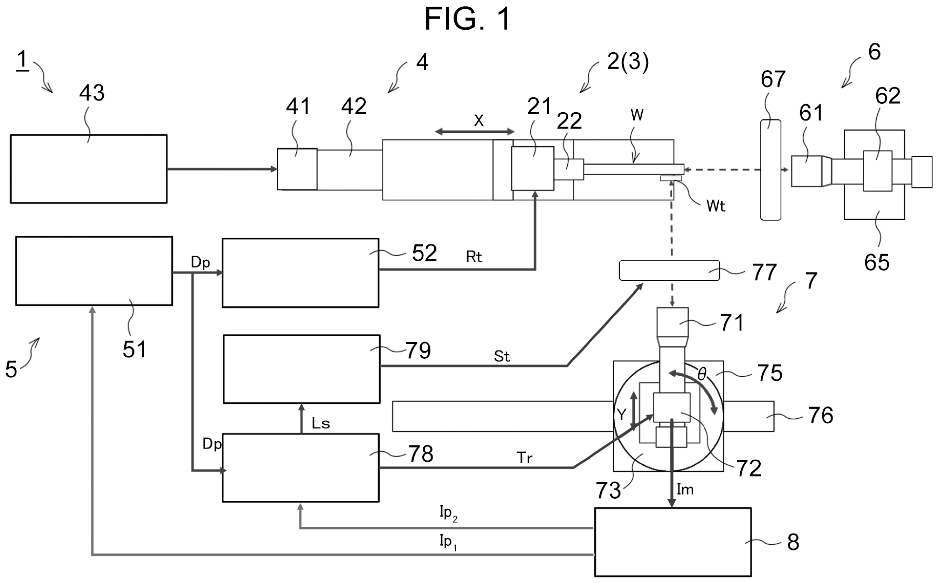

That is, what is referred to is that for example, when the site-of-interest imaging unit images a site-of-interest (cutting part) of a cutting tool sequentially rotating at a predetermined rotation angle or sliding in an axial direction, a camera and a lens constituting the site-of-interest imaging unit do not change the orientation (imaging angle) to any direction and the position to be focused (focal position) on the cutting tool moves to the corresponding position on the peripheral surface. As an explanation for this, for example, in the tool imaging device 1 shown in FIG. 1, the imaging area lens 71 and the imaging area camera 72 constituting the site-of-interest imaging unit 7 focus on a site-of-interest Wt in a workpiece (cutting tool) W in such a manner that it can be imaged and these imaging area lens 71 and imaging area camera 72 can image another site-of-interest Wt in the workpiece W without changing the imaging angle even when the workpiece W rotates or slides.

Further, in the present specification, examples of the "cutting part with a plurality of flutes helically extending on a peripheral surface of the cutting tool" may include cutting tools such as drills and end mills having a plurality of flutes, such as a two-flute cutting edge (two edges) and a four-flute cutting edge (four edges). Furthermore, the number of flutes of the cutting part of the cutting tool may be greater than the number mentioned above.

### ADVANTAGEOUS EFFECTS OF INVENTION

As described above, according to a tool imaging device of the present invention, a configuration is adopted in which with a site-of-interest detection unit that specifies in advance, as a site-of-interest, a portion of a cutting part extending on a peripheral surface of a cutting tool and a site-of-interest imaging unit that images the site-of-interest, the site-of-interest in the cutting part is imaged at the same imaging angle. With this, the state of the cutting part can be accurately imaged with stable focus and a small number of images and less data amount without being affected by the shine of the cutting tool as a workpiece, or the like. Therefore, a tool imaging device excellent in imaging quality, as well as in data handling and imaging efficiency can be realized.

The other objects, features, and advantages of the present invention will become apparent from the following description of embodiments of the present invention with reference to the accompanying drawings.

### BRIEF DESCRIPTION OF DRAWINGS

FIG. 1 is a diagram schematically explaining a tool imaging device according to the present invention, which is a schematic diagram showing an example of the overall configuration of the tool imaging device.

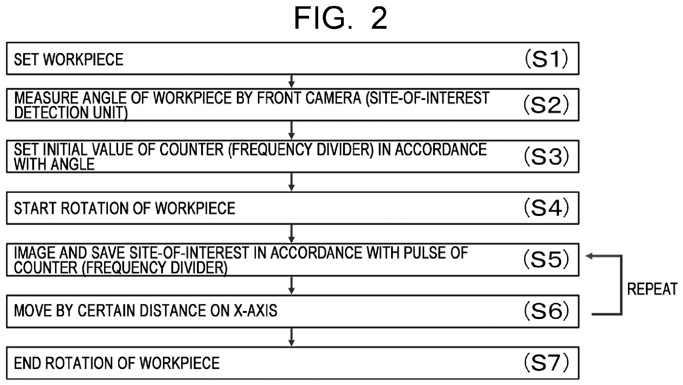

FIG. 2 is a chart schematically explaining the tool imaging device according to the present invention, which is a flowchart showing an example of operation when the tool imaging device shown in FIG. 1 images a cutting tool as a workpiece.

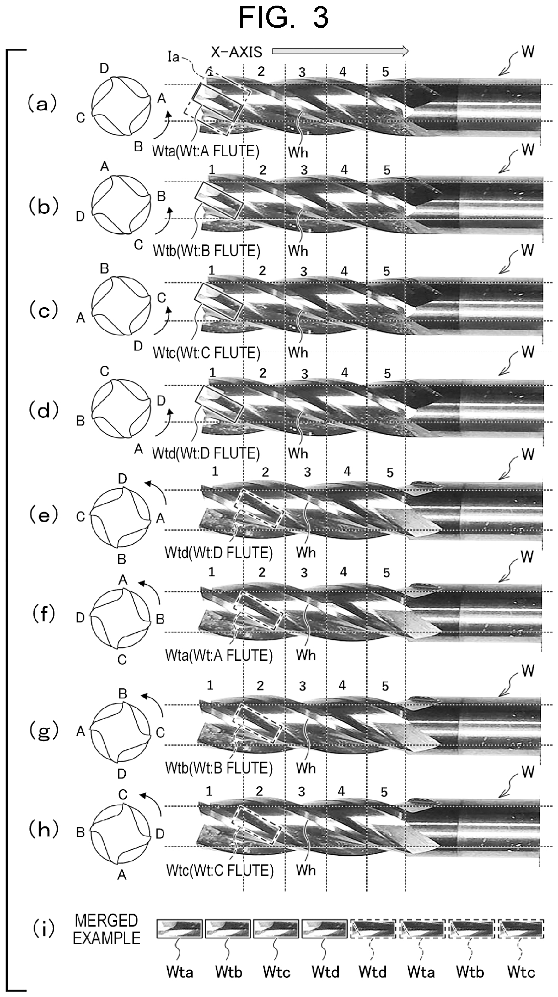

FIGS. 3 are views schematically explaining the tool imaging device according to the present invention: FIGS. 3(a) to (h) are schematic views showing imaging positions of a site-of-interest specified in an extending direction of a cutting part with different flutes in a cutting tool with four flutes (four edges); and FIG. 3(i) is a schematic view showing a merged example of images obtained by imaging the site-of-interest shown in FIGS. 3(a) to (h).

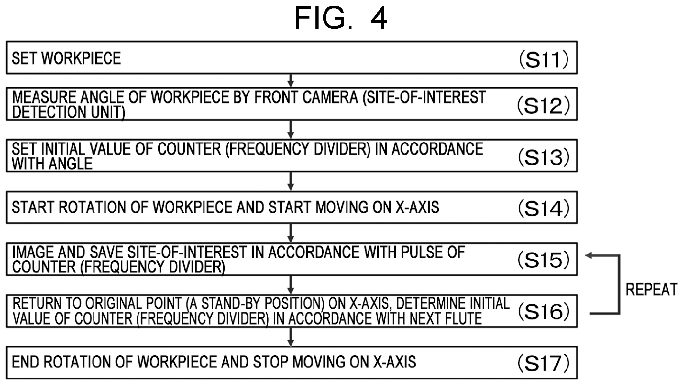

FIG. 4 is a chart schematically explaining the tool imaging device according to the present invention, which is a flowchart showing another example of operation when the tool imaging device shown in FIG. 1 images the cutting tool as the workpiece.

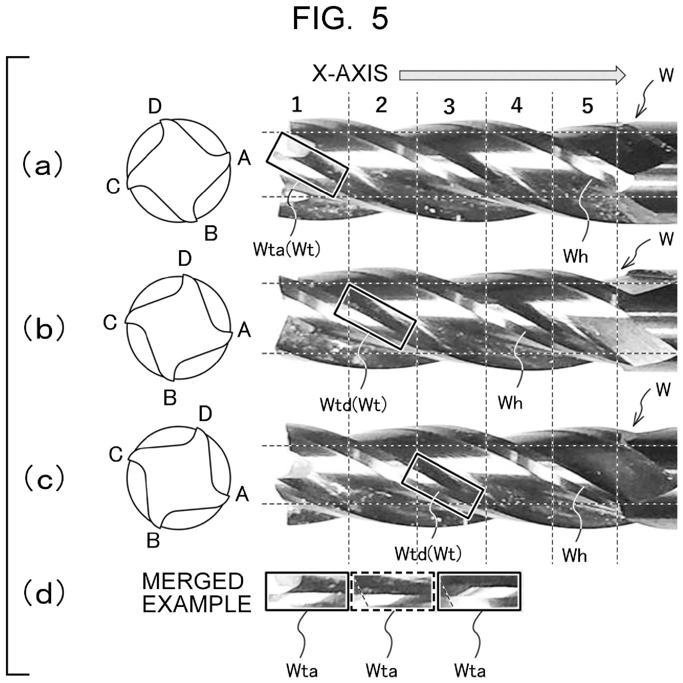

FIGS. 5 are views schematically explaining the tool imaging device according to the present invention: FIGS. 5(a) to (c) are schematic views showing imaging positions of a site-of-interest specified in the extending direction of the cutting part in the same flute in the cutting tool with four flutes (four edges); and FIG. 5(d) is a schematic view showing a merged example of images obtained by imaging the site-of-interest shown in FIGS. 5(a) to (c).

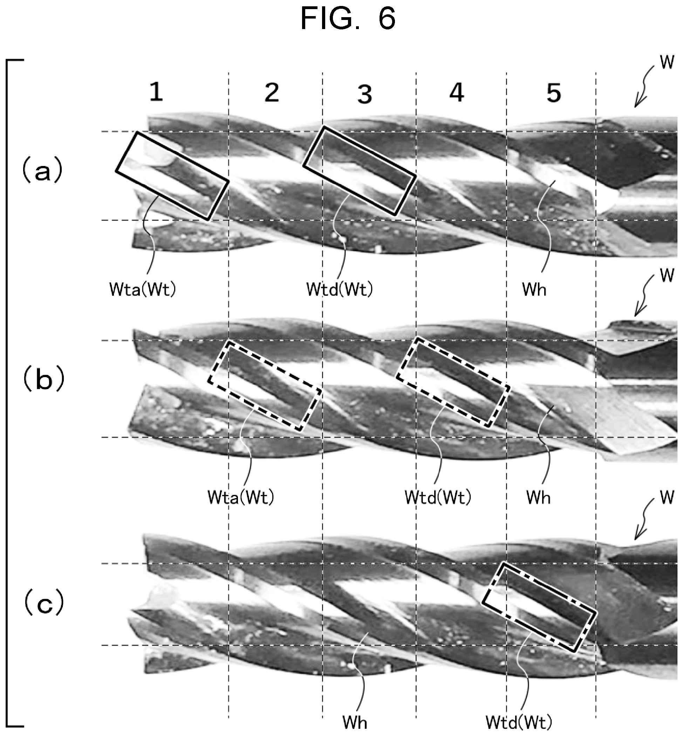

FIGS. 6 are views schematically explaining the tool imaging device according to the present invention: FIGS. 6(a) to (c) are schematic views showing imaging positions of a site-of-interest in each of flutes A to D.

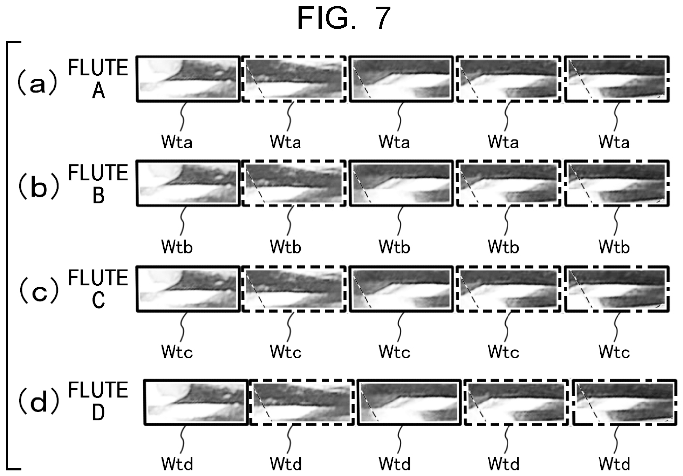

FIGS. 7 are views schematically explaining the tool imaging device according to the present invention, which are views of merged images of the site-of-interest in each of the flutes A to D shown in FIGS. 6(a) to (c): FIG. 7(a), FIG. 7(b), FIG. 7(c), and FIG. 7(d) are schematic views showing merged examples of images of the site-of-interest in the flute A, the flute B, the flute C, and the flute D, respectively.

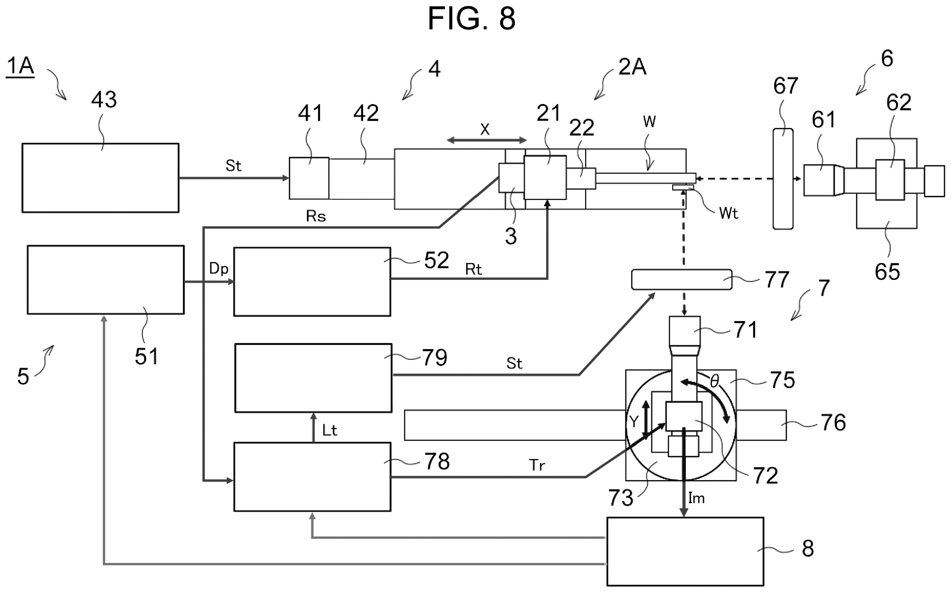

FIG. 8 is a diagram schematically explaining the tool imaging device according to the present invention, which is a schematic diagram showing another example of the overall configuration of the tool imaging device.

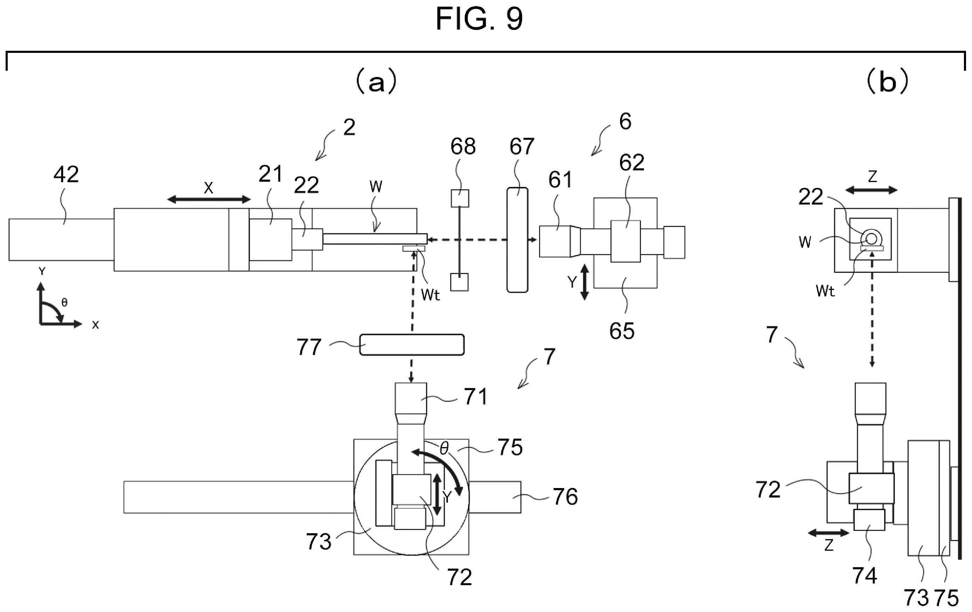

FIGS. 9 are diagrams schematically explaining the tool imaging device according to the present invention, which are schematic diagrams showing an operation example of the tool imaging device: FIG. 9(a) is a plan view seen from above; and FIG. 9(b) is a view of a main part in FIG. 9(a) seen from the side.

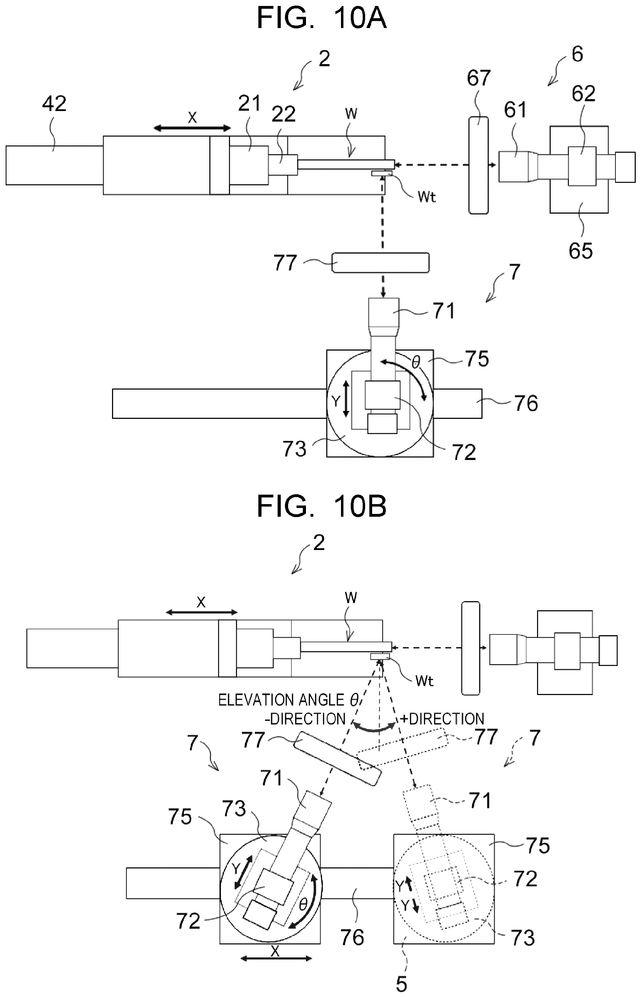

FIG. 10A is a diagram schematically explaining the tool imaging device according to the present invention, which is a schematic diagram showing an operation example of the tool imaging device and is a plan view showing the state of a site-of-interest imaging unit being set so as to image a site-of-interest in the cutting tool as the workpiece in a direction orthogonal to the axis of the cutting tool.
FIG. 10B is a diagram schematically explaining the tool imaging device according to the present invention, which is a schematic diagram showing an operation example of the tool imaging device and is a plan view showing the state of a site-of-interest imaging unit being set so as to image a site-of-interest in the cutting tool as the workpiece in a direction inclined at an elevation angle θ in plan view relative to the axis of the cutting tool.

### DESCRIPTION OF EMBODIMENTS

Hereinafter, first and second embodiments of a tool imaging device according to the present invention will be described in detail with reference to the drawings, as appropriate.

Note that the drawings used in the following description occasionally illustrate portions as features so as to be slightly enlarged as a matter of convenience for easier understanding of the features of the tool imaging device of the present invention, and the dimensional ratios and the like of each constituent element occasionally differ from the actual ones. Further, the materials, the dimensions, and the like that are illustrated in the following description are examples, and the present invention is not limited thereto and can be carried out with appropriate changes without changing its gist.

Further, in the present specification, both the first and second embodiments below will be described with reference to a tool imaging device 1 shown in FIG. 1. That is, the tool imaging device 1 described in each embodiment below has basically the same configuration, but for the sake of explaining the imaging position, the operation mode, and the like with respect to a cutting tool (workpiece W) which is an object to be imaged, the first embodiment and the second embodiment will be separately described in the present specification.

### <First Embodiment>

The tool imaging device of the first embodiment of the present invention will be described with reference to FIGS. 1 to 3 and 6 to 10A and 10B.
FIG. 1 is a schematic diagram showing the overall configuration of the tool imaging device 1 of the present embodiment.
FIG. 2 is a flowchart showing an example of operation when the tool imaging device 1 shown in FIG. 1 images the workpiece W.
FIGS. 3(a) to (h) are schematic views showing imaging positions of a site-of-interest Wt specified in an extending direction of a cutting part Wh with different flutes A to D in the workpiece W, which is a cutting tool with four flutes (four edges); and FIG. 3(i) is a schematic view showing a merged example of images obtained by imaging the site-of-interest Wta, Wtb, Wtc, Wtd shown in FIGS. 3(a) to (h).
FIGS. 6(a) to (c) are schematic views showing imaging positions of the site-of-interest Wt in each of the flutes A to D.
FIGS. 7 are views of merged images of the site-of-interest in each of the flutes A to D shown in FIGS. 6(a) to (c): and FIG. 7(a), FIG. 7(b), FIG. 7(c), and FIG. 7(d) are schematic views showing merged examples of images of the site-of-interest in the flute A, the flute B, the flute C, and the flute D, respectively.
FIG. 8 is a schematic diagram showing the overall configuration of a tool imaging device 1A of another example of the present embodiment.
FIGS. 9(a) and (b) are schematic diagrams showing an operation example of the tool imaging device 1.
FIGS. 10A and 10B are schematic diagrams showing an operation example of the tool imaging device 1.

The tool imaging device 1 according to the present invention images the cutting part Wh with a plurality of flutes helically extending on a peripheral surface of the workpiece (cutting tool) W, the cutting tool in a substantially round-rod shape to be used for machining of an object to be machined, for example, drill bits used for drilling machines, lathes, hand drills, and the like, and end mills used for milling machines being a workpiece. Examples of such a workpiece W may include those having a plurality of flutes, such as a two-flute cutting edge (two edges) and a four-flute cutting edge (four edges), as described above. The tool imaging device 1 of the present embodiment performs quality management by imaging a cutting part of various cutting tools as described above as the workpiece W, so as to secure excellent machining performance of the cutting tools.

### [Overall configuration of tool imaging device]

As shown in FIG. 1 (see also FIG. 3, etc.), the tool imaging device 1 of the present embodiment generally includes: a workpiece rotation unit (workpiece rotation unit) 2 that sequentially rotates the workpiece W at a predetermined rotation angle by having an axis of the workpiece W as a rotation axis; a rotation angle management unit (rotation angle management unit) 3 that detects a rotation angle of the workpiece W brought by the workpiece rotation unit 2; a rotation angle control unit (rotation angle control unit) 5 that controls the rotation angle of the workpiece W brought by the workpiece rotation unit 2; a workpiece sliding unit (workpiece sliding unit) 4 that slides the workpiece W in a direction along the axis; a site-of-interest detection unit (site-of-interest detection unit) 6 that detects in advance at least a portion of the cutting part Wh of the workpiece W, as a site-of-interest Wt for quality management of the cutting part Wt; a site-of-interest imaging unit (site-of-interest imaging unit) 7 that images the site-of-interest Wt in the cutting part Wh of the workpiece W; and an image processing unit (image processing unit) 8 that performs image processing of image data Im from the site-of-interest imaging unit 7.

Further, in the tool imaging device 1 of the present embodiment, the site-of-interest detection unit 6 specifies in advance at least one site (one location) along the extending direction of the cutting part Wh, for each cutting part Wh with a plurality of flutes (flutes A to D in FIGS. 3(a) to (h)) in the workpiece W, as the site-of-interest Wt (Wta, Wtb, Wtc, Wtd). Then, the site-of-interest imaging unit 7 sequentially and continuously images the site-of-interest Wt in the workpiece W sequentially rotating at a predetermined rotation angle, at the same imaging angle for each site-of-interest.

Note that in the tool imaging device 1 of the example shown in FIG. 1, a motor 21 constituting the workpiece rotation unit 2 is a pulse motor (stepping motor), so that the workpiece rotation unit 2 also functions as a rotation angle management unit, forming an integrated configuration.

The workpiece rotation unit 2 clamps the workpiece W, which is a substantially round rod-shaped cutting tool, and sequentially rotates the workpiece W at a predetermined rotation angle by having the axis of the workpiece W as the rotation axis.

The workpiece rotation unit 2 in the illustrated example includes the motor 21 for rotating the workpiece W and a clamping member 22 for clamping the workpiece W and transmitting the rotation of the motor 21 to the workpiece W, and is configured so that the motor 21 is supported on a housing.

The motor 21 is not particularly limited, and a servo motor, a pulse motor, or the like capable of controlling the rotation angle can be adopted without any restrictions. For example, when a pulse motor is used for the motor 21, it becomes possible to rotate the workpiece W with high precision at a desired rotation angle, and in addition, the function of the rotation angle management unit described later is also equipped, thus allowing for a simple overall configuration of the device.

The clamping member 22 is also not particularly limited, and for example, a clamper typically used in lathes or the like can be used without any restrictions.

The rotation angle management unit 3 is connected to the workpiece rotation unit 2 or is provided substantially integrally with the workpiece rotation unit 2 by using a pulse motor as described above in the workpiece rotation unit 2, thereby detecting the rotation angle of the workpiece W brought by the workpiece rotation unit 2.

Meanwhile, as in a tool imaging device 1A shown in FIG. 8, for example, it is also possible to provide the rotation angle management unit 3 outside the motor 21 so as to be connected to the motor 21. As such a rotation angle management unit 3, those which are conventionally, publicly known, such as a rotary encoder and a frequency divider, can be adopted without any restrictions.

As described above, when the configuration is adopted in which the rotation angle management unit 3 is connected to the motor 21 from outside, a servo motor is adopted as the above-described motor 21 so that the rotation angle of the motor 21 can be detected by the rotation angle management unit 3.

As described above, the rotation angle control unit 5 controls the rotation angle of the workpiece W brought by the workpiece rotation unit 2, and is composed of a motor control signal generator 51 and a motor driver 52 in the example shown in FIG. 1.

The motor control signal generator 51 transmits, to the motor driver 52, a control signal Dp for rotating the motor 21 at a predetermined rotation angle, and for example, a pulse generator or the like typically used in this field can be adopted.

The motor driver 52 supplies the motor 21 with a drive current Rt for rotationally driving the motor 21, and for example, a typical motor driver can be used.

The workpiece sliding unit 4 slides the workpiece rotation unit 2 in a direction along the axis of the workpiece W, that is, in an X direction (X-axis direction) shown in FIG. 1, thereby sliding the workpiece W clamped to the workpiece rotation unit 2 in the X-axis direction.

The workpiece sliding unit 4 in the illustrated example includes a sliding motor 41, an X-axis stage 42, and a sliding motor driver 43.

The sliding motor 41 transmits a rotational force to the X-axis stage 42, which will be described later, thereby moving the X-axis stage 42 in the X-axis direction, and a typical motor can be adopted.

As described above, the X-axis stage 42 converts the rotational force transmitted from the sliding motor 41 into a kinetic energy in the X-axis direction by means of a gear mechanism (illustration thereof omitted) or the like that is provided inside. The configuration is made such that the workpiece rotation unit 2 described above is connected to an end of the X-axis stage 42 on a side opposite to the sliding motor 41, and the workpiece rotation unit 2 and consequently, the workpiece W clamped to the workpiece rotation unit 2 can be slid in the X-axis direction.

The sliding motor driver 43 supplies the sliding motor 41 with current for rotationally driving the sliding motor 41, and, as with the motor driver 52 described above, for example, a typical motor driver can be used.

The site-of-interest detection unit 6 detects in advance at least a portion of the cutting part Wh of the workpiece W, as the site-of-interest Wt for quality management or the like of the workpiece W.

The site-of-interest detection unit 6 in the illustrated example is arranged at a position spaced from an open end side of the workpiece W on a side opposite to the workpiece rotation unit 2, and includes a detection area lens 61, a detection area camera 62, a fixing plate 65, and a detection illuminator 67.

The detection area lens 61 is arranged coaxially with the axis of the workpiece W, and is configured so that an image viewed from the open end side of the workpiece W is incident from an incident end. The detection area lens 61 causes the incident image of the workpiece W to be made incident on the detection area camera 62, which will be described later, while magnifying or reducing it.

The detection area camera 62 is attached to a rear end side of the detection area lens 61 and is configured such that an image on the open end side of the workpiece W incident on the detection area lens 61 can be made incident and detected.

The detection area camera 62 is not particularly limited, and cameras used in inspection equipment or the like can be adopted without any restrictions.

The detection illuminator 67 is an illuminator that is arranged between the incident end of the detection area lens 61 and the open end side of the workpiece W and that illuminates the open end side of the workpiece W. The detection illuminator 67 is not particularly limited, and illuminators or the like conventionally used in inspection devices or the like can be adopted without any restrictions.

With the above-described configuration, the site-of-interest detection unit 6 specifies the site-of-interest Wt to be imaged in the cutting part Wh by observing an end face of the cutting part Wh provided with a plurality of flutes (flutes A to D) from the open end side of the workpiece W (see the drawings on the left side of FIGS. 3(a) to (h)). In doing so, as shown in FIGS. 9(a) and (b), it is preferable to appropriately adjust the position of the site-of-interest detection unit 6 in a Y-axis direction and/or a Z-axis direction in the drawings, from the perspective of accurately determining the focus with respect to the workpiece W.

Note that in the present embodiment, for the site-of-interest detection unit 6, a method of observing the end face of the cutting part Wh using the detection area camera 62 is mainly described, but the method is not limited thereto, and for example, an optical sensor 68 as shown in FIG. 9(a) may also be concurrently used.

Further, in the present embodiment, in addition to the site-of-interest detection unit 6, it is preferable to specify the site-of-interest Wt in the cutting part Wh while observing the peripheral surface of the workpiece W by means of the site-of-interest imaging unit 7, which will be described later, from the perspective of enabling the site-of-interest Wt to be even more accurately specified by using a plurality of cameras.

The site-of-interest imaging unit 7 images the site-of-interest Wt in the cutting part Wh from the peripheral surface of the workpiece W, that is, from a side surface where the cutting part Wh is formed.

The site-of-interest imaging unit 7 in the illustrated example generally includes: an imaging area lens (imaging lens) 71; a rotating stage 73; an imaging area camera 72; a mounting plate 75; a linear guide 76; and an imaging illuminator 77. Further, the site-of-interest imaging unit 7 additionally includes a frequency divider 78 connected to the motor control signal generator 51 described above, and a strobe driver 79 connected to the frequency divider 78.

The imaging area lens 71 is configured such that an image of the workpiece W viewed from the peripheral surface side, that is, an image of the site-of-interest Wt, is made incident from an incident end, in a direction orthogonal to the axis of the workpiece W. The imaging area lens 71 causes the incident image of the site-of-interest Wt in the workpiece W to be made incident on the imaging area camera 72, which will be described later, while magnifying or reducing it.

Note that although the detailed illustration is omitted, it is preferable that the site-of-interest imaging unit 7 be provided with the imaging area lens 71 in an inclined manner so as to correspond to each site-of-interest Wt in the cutting part Wh helically extending on the workpiece W. In this manner, the imaging area lens 71 is inclined so as to align with an inclination angle of the site-of-interest Wt, that is, the cutting part Wh, so that the visualization and imaging by the imaging area camera 72, which will be described later, become accurate.

The imaging area camera 72 is attached to a rear end side of the imaging area lens 71 and is configured such that an image of the site-of-interest Wt in the workpiece W incident on the imaging area lens 71 is made incident and can be imaged. The imaging area camera 72 transmits the image data Im of the site-of-interest Wt to the image processing unit 8, which will be described later.

The imaging area camera 72 is also not particularly limited, and cameras used in inspection equipment or the like can be adopted without any restrictions.

The rotating stage 73 has a central axis (illustration thereof omitted) attached to the mounting plate 75, which will be described later, and is configured so as to be rotatable about the central axis. The imaging area lens 71 and the imaging area camera 72 are attached to an upper surface side of the rotating stage 73. In this manner, the angles of the imaging area lens 71 and the imaging area camera 72 with respect to the workpiece W can be changed in accordance with the rotation of the rotating stage 73.

As described above, the central axis of the rotating stage 73 is attached to the mounting plate 75, the mounting plate 75 rotatably supporting the rotating stage 73, as well as the imaging area lens 71 and the imaging area camera 72 that are attached to the upper surface side of the rotating stage 73.

Further, although detailed illustration is omitted, the mounting plate 75 is provided with a through hole through which the linear guide 76, which will be described later, can be inserted in a planar direction of the mounting plate 75.

The linear guide 76 is, for example, a rod-shaped member made of a metal material such as stainless steel. As described above, the linear guide 76 is inserted into the mounting plate 75 in the planar direction, thereby supporting the mounting plate 75, as well as the rotating stage 73 that supports the imaging area lens 71 and the imaging area camera 72, in a slidable manner in a longitudinal direction of the linear guide 76.

The imaging illuminator 77 is arranged between the incident end of the imaging area lens 71 and the peripheral surface side of the workpiece W, and illuminates at least the site-of-interest Wt in the workpiece W. The imaging illuminator 77 is also not particularly limited, and strobe illuminators or the like conventionally used in inspection devices or the like can be adopted without any restrictions.

Note that as shown in FIGS. 9(a) and (b), for the site-of-interest imaging unit 7 as well, it is preferable to appropriately adjust the positions of the mounting plate 75 and each element mounted thereon in the Y-axis direction and/or the Z-axis direction in the drawings. Here, the mounting plate 75 is slid in the longitudinal direction of the linear guide 76 when moved in the X-axis direction.

Further, though the details will be described later, by appropriately rotating the rotating stage 73, the imaging area lens 71 and the imaging area camera 72 are rotatably moved by an elevation angle θ in plan view, so that it is also possible to appropriately change the imaging angle with respect to the site-of-interest Wt in the workpiece W.

The control signal Dp transmitted from the motor control signal generator 51 described above is input to the frequency divider 78 and the motor driver 52 in parallel. Further, an imaging control signal Ip₂, which is computed by and transmitted from the image processing unit 8, which will be described later, based on the image data from the site-of-interest imaging unit 7, is input to the frequency divider 78.

Then, the frequency divider 78 transmits a strobe drive signal Ls synchronized with the control signal Dp to the strobe driver 79, which will be described later.

Further, the frequency divider 78 transmits an imaging trigger signal Tr synchronized with the control signal Dp to the imaging area camera 72. In this manner, for example, when a shutter mechanism (illustration thereof omitted) is installed in the imaging area lens 71 or its periphery in the site-of-interest imaging unit 7, the shutter operation caused by the imaging trigger signal Tr enables blur-free imaging of the site-of-interest Wt in the workpiece W at the optimal timing.

The frequency divider 78 is not particularly limited, and for example, those equipped with a counter function can be adopted.

The strobe driver 79 transmits a strobe lighting signal St to the imaging illuminator 77 in synchronization with the timing of imaging the site-of-interest Wt in the workpiece W by the imaging area camera 72, based on the strobe drive signal Ls input from the frequency divider 78, thereby lighting the imaging illuminator 77. This makes it possible to image the site-of-interest Wt in the workpiece W at the optimal timing without blurring, with the same effect of the shutter mechanism described above.

With the input of the image data Im of the site-of-interest Wt transmitted from the imaging area camera 72, the image processing unit 8 performs image processing to output whether the quality of the cutting part Wh of the cutting tool as the workpiece W is good or bad so as to be visually recognizable on a display or the like. Further, the image processing unit 8 performs computation based on the above image processing, and as a result of the computation, transmits the imaging control signal Ip₂ to the frequency divider 78 and a pulse control signal Ip₁ to the motor control signal generator 51.

The image processing unit 8 is not particularly limited as long as it can perform image processing to the extent that it can determine whether the cutting part Wh of the workpiece W is good or bad, and commercially available personal computers, tablet terminals, or the like can be adopted without any restrictions.

As described above, in the tool imaging device 1, the site-of-interest detection unit 6 specifies, as the site-of-interest Wt, at least one site (one location) along the extending direction of the cutting part Wh, for each cutting part Wh with the plurality of flutes in the workpiece W, and the site-of-interest imaging unit 7 sequentially and continuously images the site-of-interest Wt in the workpiece W sequentially rotating at a predetermined rotation angle, at the same imaging angle for each site-of-interest.

### [Detailed operation of tool imaging device]

The details of the imaging operation for the workpiece W of the tool imaging device 1 of the present embodiment with the above-described configuration will be described with reference to the overall configuration diagram in FIG. 1, as well as the flowchart in FIG. 2 and the drawings in FIGS. 3(a) to (i) showing the imaging positions of the site-of-interest Wt (Wta, Wtb, Wtc, Wtd) in the workpiece W.

According to the tool imaging device 1 of the present embodiment, with the following operation, the site-of-interest Wt specified for each cutting part Wh with a plurality of flutes that the workpiece W includes can be efficiently imaged.

First, the site-of-interest detection unit 6 specifies one site (one location) along the extending direction of the cutting part Wh, for each cutting part Wh with a plurality of flutes A to D in the workpiece W, as the site-of-interest Wt (Wta) in quality management of the cutting part Wh. In the example shown in FIG. 3(a), one location of the cutting part Wh in the flute A of the workpiece W is specified as the site-of-interest Wta. In doing so, as shown in the flowchart in FIG. 2, after the workpiece W is set in the workpiece rotation unit 2 (S1), the angle of the workpiece W is measured by the site-of-interest detection unit 6 (S2), and an initial value of the frequency divider 78 is set in accordance with the angle measured in S2 above (S3).

Further, in the specifying operation described above, as shown in FIG. 3(a), the site-of-interest Wt (Wta) is specified in a very small region only at a position along the cutting part Wh as compared to an imaging range Ia of a typical camera. In this manner, by limiting the size of the site-of-interest Wt so as to match each site in the cutting part Wh as necessary, the size of the image data Im can be made compact, thereby being able to obtain easy handling data.

Then, the site-of-interest imaging unit 7 sequentially and continuously images the site-of-interest Wt at one location described above in each cutting part Wh with the flutes A to D, at the same imaging angle for each site-of-interest Wt, in accordance with the rotation of the workpiece W at a predetermined rotation angle. In the example shown in FIG. 3(b), one location of the cutting part Wh in the flute B is specified as the site-of-interest Wtb, in the example shown in FIG. 3(c), one location of the cutting part Wh in the flute C is specified as the site-of-interest Wtc, and in the example shown in FIG. 3(d), one location of the cutting part Wh in the flute D is specified as the site-of-interest Wtc. At this time, the workpiece sliding unit 4 is not operated, and the workpiece W rotates at a predetermined rotation angle while remaining fixed in the X-axis direction. In doing so, as shown in the flowchart in FIG. 2, first the workpiece rotation unit 2 starts rotation to rotate the workpiece W at a predetermined rotation angle (S4), and the site-of-interest imaging unit 7 images and saves the site-of-interest Wta, Wtb, Wtc, Wtd in the workpiece W in accordance with the imaging trigger signal Tr from the frequency divider 78 (S5).

Furthermore, in accordance with the sliding of the workpiece W by a certain amount by the workpiece sliding unit 4, the site-of-interest detection unit 6 specifies, as the site-of-interest Wt, another site (one location) along the extending direction of the cutting part Wh for each cutting part Wh with the plurality of flutes A to D in the workpiece W. In the example shown in FIG. 3(e), the site-of-interest Wtd of the cutting part Wh in the flute D is specified. In doing so, as shown in the flowchart in FIG. 2, the workpiece sliding unit 4 moves the workpiece rotation unit 2 and the workpiece W by a certain distance in the X-axis direction (S6), and then the site-of-interest Wtd is specified.

Then, the site-of-interest imaging unit 7 sequentially and continuously images another site-of-interest Wt (one location) in each cutting part Wh with the flutes A to D, in accordance with the rotation of the workpiece W at a predetermined rotation angle, at the same imaging angle for each site-of-interest. In the example shown in FIG. 3(f), the site-of-interest Wta of the cutting part Wh in the flute A is specified, in the example shown in FIG. 3(g), the site-of-interest Wtb of the cutting part Wh in the flute B is specified, and in the example shown in FIG. 3(h), the site-of-interest Wtc of the cutting part Wh in the flute C is specified.

Further, the site-of-interest detection unit 6 repeats operation of specifying, as the site-of-interest Wt (see also Wta, Wtb, Wtc, Wtd shown in FIGS. 7(a) to (d)), further another site (one location) along the extending direction of the cutting part Wh, for each cutting part Wh with the plurality of flutes A to D in the workpiece W, in accordance with further sliding, by a certain amount, of the workpiece W by the workpiece sliding unit 4 (see FIGS. 3(a) to (h)). In doing so, as shown in the flowchart in FIG. 2, the workpiece W is moved by a certain distance in the X-axis direction and the site-of-interest Wt is specified, and then the operation of imaging and saving the site-of-interest Wt in the workpiece W is repeated (repeating steps S5 and S6 shown in FIG. 2).

In addition to the above, the site-of-interest imaging unit 7 repeats operation of sequentially and continuously imaging further another site-of-interest Wt (see also Wta, Wtb, Wtc, Wtd shown in FIGS. 7(a) to (d)), in each cutting part Wh with the plurality of flutes A to D, in accordance with the rotation of the workpiece W at a predetermined rotation angle, at the same imaging angle for each site-of-interest. At this time, the workpiece sliding unit 4 operates in a stepwise manner, so that the workpiece W rotates at a predetermined rotation angle and moves in the X-axis direction in a stepwise manner.

Subsequently, the workpiece rotation unit 2 ends rotating the workpiece W, thus completing the imaging operation for the workpiece W, which is a cutting tool (see S7 in FIG. 2).

As a result of the above operation, the image data Im acquired by the site-of-interest imaging unit 7 is transmitted from the site-of-interest imaging unit 7 to the image processing unit 8. At this time, as necessary, captured images of each site-of-interest Wt are collected, rearranged, and merged for each flute, as in the examples shown in FIGS. 7(a) to (d), so that defects in each flute can be easily observed. Further, the image data Im of the captured images of each site-of-interest Wt is merged as in the example shown in FIG. 3(i) and the images of each flute are added and merged in accordance with the distance from a tip end of the workpiece W without distinguishing the flutes from one another to form one connected image, so that merging can also be performed so as to facilitate checking. FIG. 3(i) shows an example of merged image data Im obtained by imaging the site-of-interest Wt in the cutting part Wh in each of the plurality of flutes A to D shown in the respective FIGS. 3(a) to (h). Specifically, the left side in the width direction of FIG. 3(i) shows a merged example of each image data Im obtained by imaging the site-of-interest Wta, Wtb, Wtc, Wtd, as one site in the cutting part Wh in the plurality of flutes A to D shown in FIGS. 3(a) to (d). Further, the right side in the width direction of FIG. 3(i) shows a merged example of each image data Im obtained by imaging the site-of-interest Wta, Wtb, Wtc, Wtd, as another site in the cutting part Wh in the plurality of flutes A to D shown in FIGS. 3(e) to(h).

Moreover, in the present embodiment, for example, by using each site-of-interest Wt in the workpiece W as shown in FIGS. 6(a) to (c), the image data of the site-of-interest Wta, Wtb, Wtc, Wtd in each of the flutes A to D is merged as shown in FIGS. 7(a) to (d), so that it also becomes possible to manage the state of the cutting part Wh even more accurately.

Note that in the tool imaging device 1 of the present embodiment, the operation of imaging the site-of-interest Wt in the workpiece W by the site-of-interest imaging unit 7 as shown in FIG. 1 is not limited to that only in the direction orthogonal to the axis of the workpiece W. For example, as in the examples shown in FIGS. 10A and 10B, it is also possible to appropriately change the imaging angle of the site-of-interest Wt in the workpiece W using the imaging area lens 71 and the imaging area camera 72.

In this case, the orientation of the imaging area lens 71 and the imaging area camera 72 is changed from the direction orthogonal to the axis of the workpiece W as shown in FIG. 10A by an elevation angle θ as shown in FIG. 10B. That is, by appropriately rotating the rotating stage 73, the orientation of the imaging area lens 71 and the imaging area camera 72 is changed by the elevation angle θ from the direction orthogonal to the axis of the workpiece W. In doing so, in order to maintain the focus on the site-of-interest Wt in the workpiece W in accordance with the above-described change, the mounting plate 75 can be moved in the X-axis direction as in the illustrated example.

### [Function (effect) of tool imaging device]

According to the tool imaging device 1 with the above-described configuration, the state of the cutting part Wh can be accurately imaged with stable focus and a small number of images and less data amount without being affected by the shine of the cutting tool as a workpiece W, or the like. Therefore, the imaging quality, as well as data handling and imaging efficiency, is excellent.

That is, the site-of-interest imaging unit 7 images the site-of-interest Wt at the same imaging angle, so that it is possible to image each site-of-interest Wt with the same degree of shine and reflection on the surface of the workpiece W. Further, it is possible to image the site-of-interest Wt in the workpiece W, which is a round rod-shaped cutting tool, with the same appearance across the entire circumference of the peripheral surface.

Further, the site-of-interest imaging unit 7 can image the site-of-interest Wt with high magnification and stable focus, so that for example, even when there are minute defects or the like in the workpiece W, it is possible to image it with high resolution, thus being able to contribute to accurate quality management. Therefore, excellent machining accuracy for an object to be machined by the cutting tool as the workpiece W can be secured.

Furthermore, by limiting the imaging range (field of view of imaging) of the site-of-interest imaging unit 7 to the main area in the cutting part Wh, that is, only the site-of-interest Wt along the cutting part Wh, focusing in imaging is more easily achieved, and thus, imaging with high resolution becomes possible in the similar manner as described above.

In addition, since the image data can be made with a small number of images and in a significantly small data size, quality management and inspection are available with compact image data as compared to, for example, a case in which the entire circumference of a round rod-shaped workpiece is imaged with a high magnification unconditionally. This allows for expedited inspection processing and the use of inexpensive, commercially available personal computers, tablet devices, and the like as the image processing unit, which leads to cost reduction of devices and, consequently, reduced inspection and production costs.

### <Second Embodiment>

A second embodiment of the present invention will be described in detail with reference to FIG. 4 and FIG. 5, in addition to FIG. 1 referred to in the first embodiment.

Note that the tool imaging device described in the present embodiment has the same configuration as that of the tool imaging device described in the first embodiment, and thus, the detailed description thereof will be omitted by referring to the same FIG. 1 and assigning the same reference signs.

The operation of the tool imaging device 1 described in the present embodiment differs from the operation of the tool imaging device 1 described in the first embodiment in specifying of the site-of- interest Wt for quality management of the cutting part Wh for the workpiece W and the imaging operation.

FIG. 4 is a flowchart showing an operation example of the present embodiment when the tool imaging device 1 shown in FIG. 1 images the cutting tool as the workpiece W.

Further, FIGS. 5(a) to (c) are schematic views showing imaging positions of Wt specified in the extending direction of the cutting part Wh in the same flute (flute A) in the workpiece W that is the cutting tool with four flutes (four edges), and FIG. 5(d) is a schematic view showing a merged example of images obtained by imaging the site-of-interest Wta shown in FIG. 5(a).

The details of the imaging operation for the workpiece W of the tool imaging device 1 in the present embodiment will be described with reference to each of the above-described drawings.

First, the site-of-interest detection unit 6 specifies the site-of-interest Wt (Wta) at a plurality of locations along the extending direction of the cutting part Wh in the same one flute, the flute A in the illustrated example, of the cutting part Wh with the plurality of flutes A to D in the workpiece W (see FIG. 5(a)). In doing so, as shown in the flowchart in FIG. 4, after the workpiece W is set in the workpiece rotation unit 2 (S11), the angle of the workpiece W is measured by the site-of-interest detection unit 6 (S12), and an initial value of the frequency divider 78 is set in accordance with the angle measured in S12 above (S13).

Then, the site-of-interest imaging unit 7 sequentially and continuously images the site-of-interest Wta at the plurality of locations specified for the cutting part Wh in the same flute A, in accordance with the rotation of the workpiece W at a predetermined rotation angle and the sliding of the workpiece W by the workpiece sliding unit 4, at the same imaging angle for each site-of-interest. At this time, the workpiece sliding unit 4 continuously moves the workpiece rotation unit 2 and the workpiece W in the X-axis direction in a stepwise manner. In doing so, as shown in the flowchart in FIG. 4, first, the workpiece rotation unit 2 starts rotation to rotate the workpiece W at a predetermined rotation angle, and the workpiece sliding unit 4 starts moving the workpiece W in the X-axis direction (S14). Further, the site-of-interest imaging unit 7 images and saves the site-of-interest Wta in the workpiece W in accordance with the imaging trigger signal Tr from the frequency divider 78 (S15).

Furthermore, the site-of-interest detection unit 6 specifies the site-of-interest Wtd at a plurality of locations along the extending direction of the cutting part Wh in another same flute, the flute D in the example shown in FIGS. 5(b) and (c), of the cutting part Wh with the plurality of flutes A to D in the workpiece W. In doing so, as shown in the flowchart in FIG. 4, the workpiece sliding unit 4 returns to a stand-by position (original point) and an initial value of the frequency divider 78 is set in accordance with the next flute D (S16).

Then, the site-of-interest imaging unit 7 sequentially and continuously images the site-of-interest Wtd at the plurality of locations specified for the cutting part Wh in the flute D, in accordance with the rotation of the workpiece W at a predetermined rotation angle and the sliding of the workpiece W, at the same imaging angle for each site-of-interest (S15 shown in FIG. 4).

Moreover, the site-of-interest detection unit 6 repeats operation of specifying the site-of-interest (see Wtc shown in FIG. 7) at a plurality of locations along the extending direction of the cutting part in further another same flute, for example, the flute C though the detailed illustration is omitted, of the cutting part Wh with the plurality of flutes A to D in the workpiece W. In doing so, as shown in the flowchart in FIG. 4, the workpiece sliding unit 4 returns to a stand-by position (original point) and an initial value of the frequency divider 78 is set in accordance with the next flute C (S16).

Therefore, in the present embodiment, the above operation is repeated only by the number of flutes provided in the workpiece W.

In addition to the above, the site-of-interest imaging unit 7, for example, repeats operation of sequentially and continuously imaging the site-of-interest Wtc at the plurality of locations specified for the cutting part Wh in the flute C, in accordance with the rotation of the workpiece W at a predetermined rotation angle and the sliding of the workpiece W, at the same imaging angle for each site-of-interest. At this time, the workpiece sliding unit 4 continuously operates, so that the workpiece W rotates at a predetermined rotation angle and continuously moves in the X-axis direction. In this manner, after the site-of-interest Wt is specified, the operation of imaging and saving the site-of-interest Wt in the workpiece W is repeated (steps S15 and S16 shown in FIG. 4 are repeated).

Subsequently, the workpiece rotation unit 2 ends rotating the workpiece W and the workpiece sliding unit 4 ends moving in the X-axis direction, thus completing the imaging operation for the workpiece W, which is a cutting tool (see S17 in FIG. 4).

As a result of the above operation, the image data Im acquired by the site-of-interest imaging unit 7 is transmitted from the site-of-interest imaging unit 7 to the image processing unit 8 as with the case of the first embodiment. At this time, as necessary, as in the example shown in FIG. 5(d), the image data Im obtained by imaging each site-of-interest Wt is merged, so that it becomes possible to manage the state of the cutting part Wh more accurately.

Furthermore, in the present embodiment as well, for example, by using each site-of-interest Wt in the workpiece W as shown in FIGS. 6(a) to (c) to merge the image data of the site-of-interest Wta, Wtb, Wtc, Wtd in each of the flutes A to D as shown in FIGS. 7(a) to (d), it becomes possible to manage the state of the cutting part Wh even more accurately.

In the operation of the tool imaging device 1 of the present embodiment as well, as with the case of the first embodiment, the site-of-interest Wt specified in each of the plurality of flutes A to D that the workpiece W has can be efficiently imaged.

Note that when used in the operation as in the present embodiment, the tool imaging device 1 performs the operation of continuously imaging the workpiece W while continuously moving it in the X-axis direction and is thus extremely suitable for imaging and inspecting the workpiece W with a relatively small number of flutes (for example, around 4 flutes).

### <Function and effect>

As described above, the tool imaging device 1 (1A) of the present embodiment includes the site-of-interest detection unit 6 that specifies in advance a portion of the cutting part Wh extending on the peripheral surface of the workpiece W, as the site-of-interest Wt, and a site-of-interest imaging unit 7 that images the site-of-interest Wt, and adopts the configuration that images the site-of-interest Wt in the cutting part Wh at the same imaging angle. With this, the state of the cutting part Wh can be accurately imaged with stable focus and a small number of images and less data amount without being affected by the shine of the cutting tool as the workpiece W, or the like. Therefore, the tool imaging device 1 (1A) excellent in imaging quality, as well as in data handling and imaging efficiency can be provided.

### <Modification of present invention>

Although embodiments of the present invention have been described in detail above, the tool imaging device of the present invention is not limited to the embodiments described above, and can be carried out with various changes and modifications without departing from the principle of the present invention and the scope of the appended claims.

### INDUSTRIAL APPLICABILITY

The tool imaging device of the present invention can accurately image the state of a cutting part of a cutting tool with stable focus, and is excellent in imaging quality, as well as in data handling and imaging efficiency. Therefore, the tool imaging device of the present invention is extremely suitable for application such as performing optimal quality management of round rod-shaped cutting tools, such as drill bits used for drilling machines, lathes, hand drills, and the like, and end mills used for milling machines.

### REFERENCE SIGNS LIST

1, 1A tool imaging device
2 workpiece rotation unit (workpiece rotation unit)
21 motor
22 clamping member
3 rotation angle management unit (rotation angle management unit)
4 workpiece sliding unit (workpiece sliding unit)
41 sliding motor
42 X-axis stage
43 sliding motor driver
5 rotation angle control unit (rotation angle control unit)
51 motor control signal generator
52 motor driver
6 site-of-interest detection unit (site-of-interest detection unit)
61 detection area lens
62 detection area camera
65 fixing plate
67 detection illuminator
7 site-of-interest imaging unit (site-of-interest imaging unit)
71 imaging area lens (imaging lens)
72 imaging area camera
73 rotation stage
75 mounting plate
76 linear guide
77 imaging illuminator
78 frequency divider
79 strobe driver
8 image processing unit (image processing unit)
Im image data
Dp control signal
Rt drive current
St strobe lighting signal
Tr imaging trigger signal
Ls strobe drive signal
Ip₁ pulse control signal
Ip₂ imaging control signal
W workpiece (cutting tool)
A-D flute (a plurality of flutes)
Wh cutting part
Wt, Wta, Wtb, Wtc, Wtd site-of-interest

## Claims

1. A tool imaging device for imaging a cutting part with a plurality of flutes helically extending on a peripheral surface of a cutting tool, the cutting tool in a round-rod shape being a workpiece to be used for machining of an object to be machined, the tool imaging device comprising:
a workpiece rotation unit that clamps the cutting tool and sequentially rotates the cutting tool at a predetermined rotation angle by having an axis of the cutting tool as a rotation axis;
a rotation angle management unit that is connected to the workpiece rotation unit or provided integrally with the workpiece rotation unit, the rotation angle management unit detecting a rotation angle of the cutting tool brought by the workpiece rotation unit;
a rotation angle control unit that controls the rotation angle of the cutting tool brought by the workpiece rotation unit;
a workpiece sliding unit that slides the cutting tool clamped to the workpiece rotation unit in a direction along the axis of the cutting tool by sliding the workpiece rotation unit in the direction along the axis of the cutting tool;
a site-of-interest detection unit that detects in advance at least a portion of the cutting part of the cutting tool, as a site-of-interest for managing the cutting part;
a site-of-interest imaging unit that images the site-of-interest in the cutting part from a side of the peripheral surface of the cutting tool; and an image processing unit that performs image processing of image data from the site-of-interest imaging unit, wherein
the site-of-interest detection unit specifies, as the site-of-interest, at least one site along an extending direction of the cutting part, for each cutting part with the plurality of flutes in the cutting tool, and
the site-of-interest imaging unit sequentially and continuously images the site-of-interest in the cutting tool sequentially rotating at the predetermined rotation angle, at a same imaging angle for each site-of-interest.

2. The tool imaging device according to claim 1, wherein
the site-of-interest detection unit specifies, as the site-of-interest, one site along the extending direction of the cutting part, for each cutting part with the plurality of flutes in the cutting tool, and
the site-of-interest imaging unit sequentially and continuously images the one site-of-interest in each cutting part with the plurality of flutes, in accordance with rotation of the cutting tool at the predetermined rotation angle, at the same imaging angle for each site-of-interest.

3. The tool imaging device according to claim 2, wherein
the site-of-interest detection unit specifies, as the site-of-interest, another site along the extending direction of the cutting part, for each cutting part with the plurality of flutes in the cutting tool, in accordance with sliding of the cutting tool by the workpiece sliding unit, and
the site-of-interest imaging unit sequentially and continuously images the other site-of-interest in each cutting part with the plurality of flutes, in accordance with the rotation of the cutting tool at the predetermined rotation angle, at the same imaging angle for each site-of-interest.

4. The tool imaging device according to claim 3, wherein
the site-of-interest detection unit repeats operation of specifying, as the site-of-interest, further another site along the extending direction of the cutting part, for each cutting part with the plurality of flutes in the cutting tool, in accordance with further sliding of the cutting tool by the workpiece sliding unit, and
the site-of-interest imaging unit repeats operation of sequentially and continuously imaging the further other site-of-interest in each cutting part with the plurality of flutes, in accordance with the rotation of the cutting tool at the predetermined rotation angle, at the same imaging angle for each site-of-interest.

5. The tool imaging device according to claim 1, wherein
the site-of-interest detection unit specifies the site-of-interest at a plurality of locations along the extending direction of the cutting part in one same flute of the cutting part with the plurality of flutes in the cutting tool, and
the site-of-interest imaging unit sequentially and continuously images the site-of-interest at the plurality of locations specified for the cutting part in the one same flute, in accordance with rotation of the cutting tool at the predetermined rotation angle and sliding of the cutting tool, at the same imaging angle for each site-of-interest.

6. The tool imaging device according to claim 5, wherein
the site-of-interest detection unit specifies the site-of-interest at the plurality of locations along the extending direction of the cutting part in another same flute of the cutting part with the plurality of flutes in the cutting tool, and
the site-of-interest imaging unit sequentially and continuously images the site-of-interest at the plurality of locations specified for the cutting part in the other same flute, in accordance with the rotation of the cutting tool at the predetermined rotation angle and the sliding of the cutting tool, at the same imaging angle for each site-of-interest.

7. The tool imaging device according to claim 6, wherein
the site-of-interest detection unit repeats operation of specifying the site-of-interest at the plurality of locations in the extending direction of the cutting part in further another same flute of the cutting part with the plurality of flutes in the cutting tool, and
the site-of-interest imaging unit repeats operation of sequentially and continuously imaging the site-of-interest at the plurality of locations specified for the cutting part in the further other same flute, in accordance with the rotation of the cutting tool at the predetermined rotation angle and the sliding of the cutting tool, at the same imaging angle for each site-of-interest.

8. The tool imaging device according to claim 1 or 2, wherein the site-of-interest imaging unit comprises a shutter mechanism.

9. The tool imaging device according to claim 1 or 2, wherein the site-of-interest imaging unit comprises a strobe illuminator that illuminates a position of at least the site-of-interest of the cutting part with the plurality of flutes extending on the cutting tool.

10. The tool imaging device according to claim 1 or 2, wherein the site-of-interest imaging unit is provided with an imaging lens in an inclined manner so as to correspond to the site-of-interest in the cutting part helically extending on the cutting tool.
